# EUROPEAN PATENT SPECIFICATION

(11) **EP 1 204 260 B1**
(45) Date of publication and mention of the grant of the patent: **10.09.2008**
(21) Application number: 01308224.3
(22) Date of filing: 27.09.2001
(51) Int. Cl.: H04L 29/12

(54) **Apparatus and method for automatically obtaining a valid IP configuration in a local area network**
Vorrichtung und Verfahren zum automatischen Erhalten einer gültigen IP Konfiguration in einem lokalen Netzwerk
Appareil et procédé pour obtenir de façon automatique une configuration IP valable dans un réseau local

(30) Priority: 30.09.2000 US 676631; 30.09.2000 US 237070 P
(43) Date of publication of application: 08.05.2002
(73) Proprietor: FLUKE CORPORATION, Everett Washington 98203 (US)
(72) Inventor: Arndt, Manfred R., Colorado Springs, Colorado 80919 (US)
(74) Representative: Burke, Steven David

(56) References cited:
- WO-A-00/63779
- US-A- 5 724 510
- US-A- 5 854 901
- US-A- 6 101 499
- PATENT ABSTRACTS OF JAPAN vol. 1996, no. 12, 26 December 1996 (1996-12-26) & JP 08 223206 A (HITACHI CABLE LTD), 30 August 1996 (1996-08-30)

## Description

### Background of the Invention

This invention relates to networks and more particularly to a method and device for automatically obtaining a valid IP configuration in a LAN and a test instrument for networks.

In switched network configurations, issues arise related to how to obtain an IP address for a device connected to the network and how to confirm the validity of IP addresses of devices on the network. Since in a switched environment, any given port will only see limited traffic passing by, (typically only traffic that is directed to that port), the amount of observable data is limited. Or, often, only broadcast traffic will be visible at the port to which a device is connected.

A device desires to select a valid IP address to use in operating on the network. However, because incorrect subnet mask and mis-configured IP addresses continue to occur on modern networks, it can be difficult to identify correct local address ranges, since conflicting and overlapping results may be obtained by observing network traffic. If an address is accidentally selected by a device that is already in use by another device on the network, the inadvertent selection of that IP address will result in other network devices incorrectly updating their address caches, which may result in traffic intended for the original valid owner of that IP address being lost or mis-delivered. This is highly undesirable, especially for a test instrument, which should not itself cause problems on the network.

Further, selection of a proper subnet mask and default router by a device is essential, because if the mask and router are not correct, the device won't communicate properly with other devices on the network. Selection of a proper domain name server (DNS) is important, too. The domain name server returns an IP address that corresponds to a symbolic name that is easier for a user to remember than a cryptic IP address would be. An improper DNS selection will not allow name resolution to occur if the DNS does not know the IP address associated with the particular name. The device might not even be able to communicate with the improper DNS selection.

A particular network may employ subnet masks, wherein IP addresses are masked with a mask value to obtain a range of IP address (e.g. A.B.C.64 through A.B.C.127). Valid IP addresses on this subnet have the last part of the address in the range 64-127. If a test instrument (or other device) does not employ an IP address within that range (e.g. A.B.C.250, which is outside the 64-127 range), replies from other devices on the network will not come back to the device because other devices sill send the packets to a router to forward to the network that the IP address should reside on (A.B.C.250 in this example) and the data won't be received by the device.

In the past, a single contiguous range of IP addresses would be used on a given network, and IP addresses outside that range had to go through a router. However, it is now common to have many non-contiguous IP address ranges on the same network cable. Determining which range is valid can be difficult.

Prior test devices required a user to supply an IP address for the device to use, requiring a level of knowledge of the network, and, relying on the hope that no devices were improperly configured with an invalid IP address.

Having two or more devices with duplicate IP addresses can result in intermittent network problems. On an Ethernet, for example, IP addresses are resolved to hardware address (the address of the MAC (media access controller)). Individual devices will maintain an ARP cache (address resolution protocol) of the MAC addresses (typically 48 bits), to avoid having to ARP each time the network is to be accessed. Performing an ARP for an IP address that is in use by more than one host on the network will result in multiple replies and indeterminate updating of the ARP caches of other hosts on the network. So, frames transmitted to the duplicate IP address will go to the wrong device part of the time, since the MAC address in the ARP cache is changing often. Then, occasionally, a host will have its ARP cache updated so the mapping of the IP addresses to the MAC addresses now shows the "desired owner" of the IP address. At that time, the ARP cache update results in transmissions going to the proper device. So, for no readily apparent reason (to the user), communications will inadvertently start working again. Such situations are to be avoided if at all possible, as the test instrument should not corrupt the network.

US 5,724,510 relates to a method for detecting duplicate internet protocol (IP) addresses in a local area network (LAN) test instrument without disrupting the LAN is provided. The LAN test instrument provides a method of choosing an IP address for itself without disrupting the ARP caches of devices connected to the LAN. Duplicate IP addresses between devices on the LAN may then be tested using a series of network broadcasts chosen to elicit responses from as many nodes on the network as possible because some nodes respond to some types of broadcasts and not others. A data base of the various nodes is collected and the newly arriving responses are dynamically compared with the responses already in the data base to detect duplicate IP addresses. Separate entries in the data base for devices having duplicate IP addresses are maintained and then displayed to the user of the LAN test instrument to selectably and reliably communicate with the devices having duplicate IP addresses for further diagnosis and correction.

### Summary of the Invention

In accordance with the invention, a method for obtaining an IP configuration automatically when a configuration is not obtainable by DHCP (Dynamic Host Configuration Protocol), traffic is continuously monitored to identify local addresses, corresponding subnet masks, local routers and servers. The information collected is stored in a database and after a period of time, valid and invalid IP subnets are determined.

Accordingly, it is an object of the present invention to provide an improved network test instrument that automatically obtains a valid IP configuration without corruption of other network hosts or the like.

It is a further object of the present invention to provide an improved method for automatically obtaining a valid IP configuration for any portable networking device.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.

### Brief Description of the Drawings

FIG. 1 is a perspective view of a test instrument employing the method of automatically obtaining a valid IP configuration;
FIG. 2 is a high level block diagram of the test instrument according to an embodiment of the invention;
FIG. 3 is a flowchart of steps in obtaining the IP configuration;
FIG. 4 is a flowchart of further steps in obtaining the IP configuration;
FIG. 5 is a flowchart of still further steps in obtaining the IP configuration;
FIG. 6 is a representative graphic showing address range validation and "best" address range selection in one possible situation; and
FIG. 7 is a representative graphic showing address range validation in another possible situation.

### Detailed Description

The system according to a preferred embodiment of the present invention comprises a network analysis instrument and method wherein a valid IP configuration is automatically obtainable.

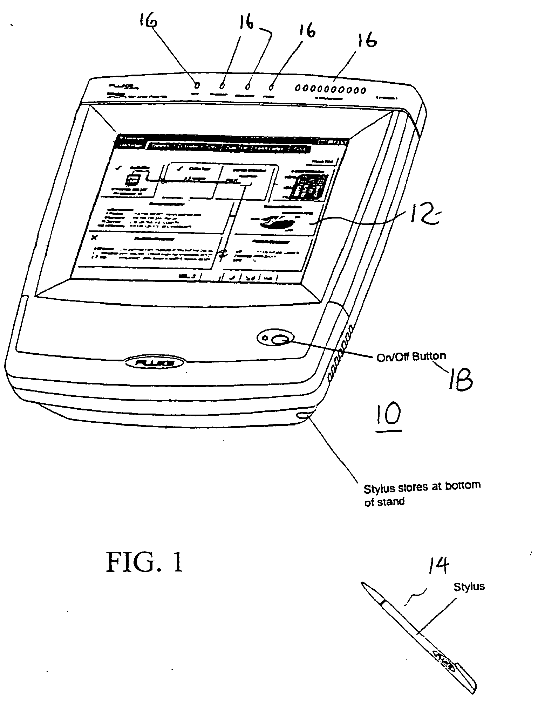

FIG. 1 is a perspective view of a representative network test instrument embodying the invention. The instrument 10 suitably is configured as a portable instrument for network testing and analysis. A display region 12 enables user interaction with the instrument. The display is suitably a touch screen type display, and a stylus 14 is employable by a user to interact with the device. Various status indicators are provided along the top of the case, to indicate link status, transmit, collision, error, percentage utilization and the like. A power button 18 is provided, also. The device is suitably powered by an internal battery system, but may also be connected to an external power source.

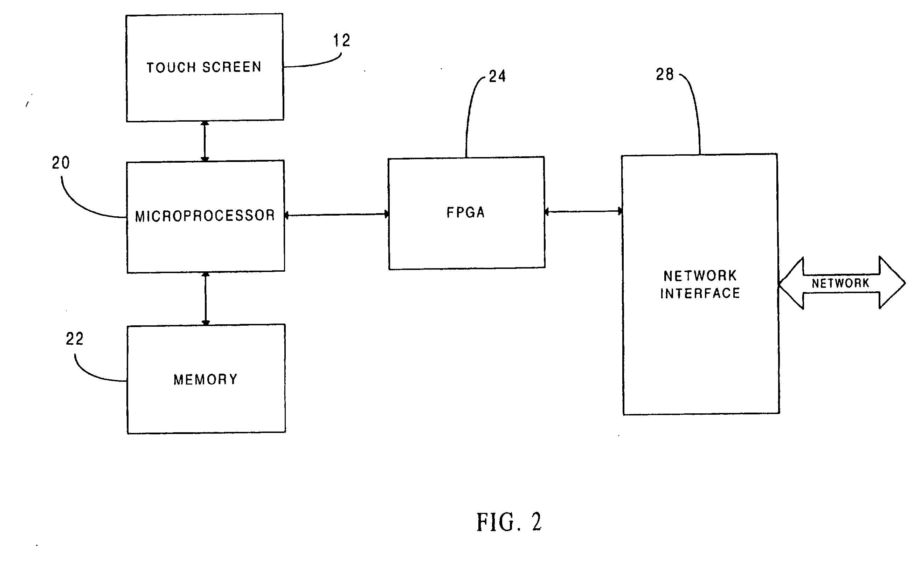

FIG. 2 is a block diagram showing a high-level representation of the test instrument. A microprocessor 20 interfaces with the touch screen 12 to display and receive information. Memory 22 is provided to the microprocessor. A field programmable gate array 24 also interfaces with the microprocessor. A network interface block 28 handles the details of actual transmission and reception to the network.

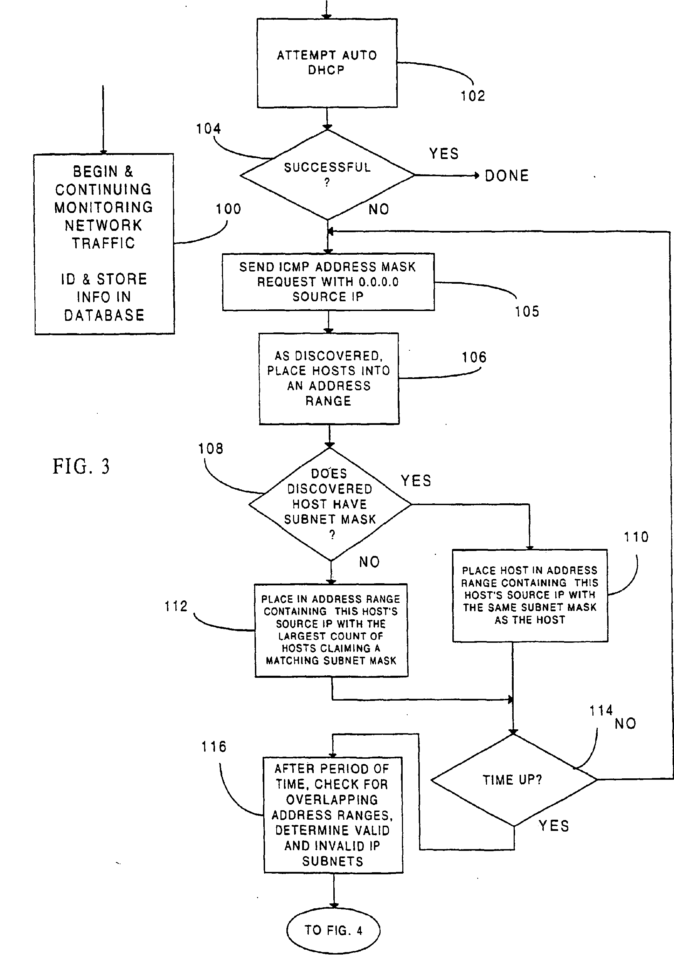

Referring to FIG. 3, a flow chart of steps performed by the test instrument according to the embodiment, initially, when the test instrument is connected to a network, it begins monitoring network traffic (step 100). It continues monitoring traffic, identifying and storing received information in a database as discussed in further detail hereinbelow.

While the monitoring of step 100 is taking place and continues to occur, in parallel with the monitoring, as soon as link is detected, DHCP (dynamic host configuration protocol) is attempted, to try to get an IP address (step 102). As is known in the art, this involves broadcasting a message to locate a DHCP server. If the attempt is successful (decision block 104), the DHCP server responds with an IP address, a subnet mask, default router, DNS server and a duration for which the IP address is valid, and the process of obtaining an IP configuration is done.

However a DHCP server does not exist on many networks or the server may be temporarily unavailable, which could be due to network operation issues that a network technician is trying to resolve, hence the use of the test instrument. In accordance with the prior art, if DHCP was not successful, a prior device would keep trying DHCP, being unable to proceed until DHCP was successful, or until the user manually provided a valid IP configuration (which is extremely difficult if the user has no prior knowledge of the attached network).

According to the test instrument, device or method described herein if DHCP was not successful, an Internet Control Message Protocol (ICMP) address mask request is sent, with a zero source IP (0.0.0.0) (step 105). ICMP is a protocol that does many things, including permitting routers to inform other hosts of IP configuration information, for example. An ICMP address mask request is one of few IP packet types that are defined to allow a reply to a zero source IP (0.0.0.0). Most IP packets are discarded by a TCP/IP stack if the source IP is zero. In response to the ICMP request, some more addresses of hosts with the corresponding subnet mask are learned because some will reply with a broadcast back to 255.255.255.255. Some routing protocols (OSPF and RIP2, for example) will advertise the subnet mask.

The system continues to monitor traffic on the network, collecting information from traffic and responses generated to the ICMP request. As local hosts are discovered by the monitoring of block 100, step 106 is performed, placing discovered host on the network into an address range. A host is the name given to any device that may be addressable on the network. IP addresses that are not local to the attached network are identified and discarded (most routing protocols and ARP requests are from local hosts, for example).

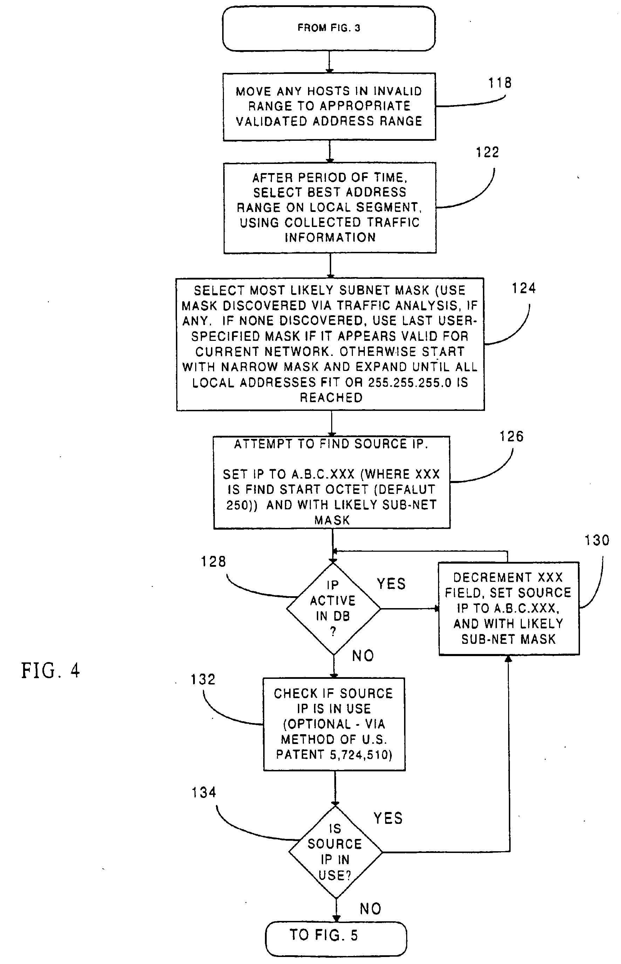

In decision block 108 a determination is made whether the discovered host reported a subnet mask. If it does, then the host is placed in a database in an address range containing the source IP address for that host and the same subnet mask as the host (step 110). If the result of the decision block 108 is that the discovered host has not reported a subnet mask, then this particular host is placed in an address range containing this host's source IP with the largest count of hosts claiming a matching subnet mask (step 112). After either of step 110 or 112, a decision is made (block 114) as to whether a sufficient amount of monitoring time has passed, and if not, processing continues with step 106 as additional hosts are discovered. The amount of monitoring time can vary, but typically may comprise in the neighborhood of 20 seconds as an example. The time may be predetermined, or, may vary depending on the volume of available data based on network traffic. Less traffic in a given period of time would suggest providing a longer time period for monitoring, so as to provide a more robust data set. Once the period of time is up, then a validation process is performed to determine valid and invalid address ranges (step 116). This process includes checking for overlapping address ranges, determining valid and invalid IP subnets. The determination is made using the best consensus based on how many hosts claim a particular subnet mask. Then, in step 118, any hosts that have been placed in an invalid range are moved to an appropriate validated range (step 118). Processing then continues with the steps discussed in connection with FIG. 4.

Referring now to FIG. 4, a further flow chart of steps performed according to the embodiment, after a period of time (block 122) a best address range on the local segment is selected, using the collected traffic information. To select the "best" address range, IP subnets where a subnet mask has been discovered or where a router has been found are preferred. Next in the preference hierarchy is to use the IP subnet that contains the most hosts. Once this local address range has been selected, then step 124 is performed, wherein the most likely subnet mask is selected. This subnet mask will only be used for selecting the test instrument's source IP, and may not actually be used (if, for example, a better one is found later on). To select a subnet mask, if the subnet mask has been discovered as a result of traffic analysis, then that discovered subnet mask is used. If not, then the last user-specified subnet mask is used, if it appears to be valid for the current network. The entire last manual configuration is saved, and can be used if desired. Otherwise, a very narrow subnet mask is tried, and is expanded until all local addresses in the selected best address range fit within the subnet mask, or until 255.255.255.0 is reached. For example, an initial subnet mask of 255.255.255.248 may be tried. If that does not work, that is, if all the local addresses in the selected best address range found during monitoring do not fit within that mask, then another least significant bit is cleared in the mask, for example, resulting in 255.255.255.240. If that mask and subsequent masks are not appropriate, successive masks of 255.255.255.224, 255.255.255.192, and 255.255.255.128 are tried. Finally, if the mask reaches 255.255.255.0, that is employed as the subnet mask for selecting the test instrument (or other device) source IP.

Next, in step 126, the test instrument attempts to find a source IP. Initially, the IP is set using a start octet value, which may be pre-selected to a particular value by a user, or, which, if not selected by the user of the test instrument, defaults to a start value, suitably 250. Thus, given a particular "best" IP address range A.B.C.XXX, then start octet value is substituted for XXX, and the subnet mask is applied to the A.B.C.XXX value. Next, the discovery database (the database of IP addresses and other information observed or "discovered" on this particular network by the test instrument) is checked (decision block 128) to see if that source IP is active on the network. A, B and C are representative of IP address values, and would depend on the network to which the device was connected. For example, if A.B.C in a particular network is 260.83.10, and the subnet is the .128 to .191 range the instrument would take 260.83.10.128 and add the start octet of 250 (assuming the default start octet of 250 and subnet mask 255.255.255.192) applied with the mask to provide an address of 260.83.10.186. The instrument will initially check to see if 260.83.10.186 has been seen already by looking for that address in the discovery database. If the particular source IP is active, then the source IP is decremented (giving 260.83.10.185) in block 130, and the process loops back to decision block 128, to see if the discovery database has this IP in it already. The process continues decrementing, and checking, until a value is determined that is not an active source IP and the source IP is still within the valid subnet range (.128 - .191 in this example).

The process then continues, checking whether the source IP is already in use, by "gratuitous ARP", for example. Optionally, checking may be done in accordance with the methods described in U.S. Patent 5,724,510 (block 132). Hosts will typically maintain an ARP cache, which stores the 48-bit media access control address for other hosts on the network. However, employing the optional steps provides an additional double check, because the desired goal is to avoid corrupting the ARP caches (which can happen if an IP address which is already in use is tested with "gratuitous ARP"), and to avoid generating console error messages at an administrators console or log file errors. If the source IP is in use by another host (decision block 134), then the process continues at block 130, wherein the XXX field is further decremented to attempt another source IP. Checking the source IP against the discovery database of IP addresses already discovered speeds up the process of automatically finding an IP address, and reduces unnecessary network traffic that would result from attempting to check the availability by generating network requests.

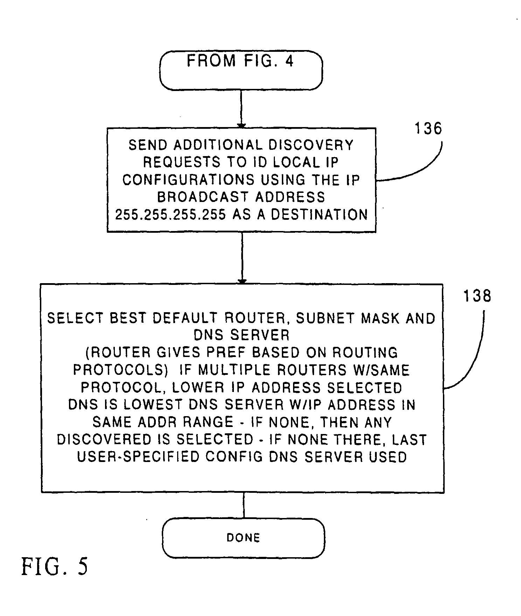

If, however, at decision block 134, the source IP is determined to not be in use, the processing continues with the steps illustrated in FIG. 5. Referring to FIG. 5, at block -1-36,--additional discovery requests are sent over the network to identify local IP configurations, since TCP/IP stacks will now respond (since we have a valid source IP). These requests include, for example, and ICMP Router Solicitation, and ICMP address mask, ICMP echo, SNMP mask request and a DNS Discovery request, to obtain more information about the network configuration and hosts thereon. These requests are sent to the limited IP broadcast address 255.255.255.255 to quickly solicit responses from all local hosts.

After these additional discovery requests have been processed, the test instrument selects the best default router, the best subnet mask and the best DNS server that have been found (block 138). To determine the best default router, all router IP address that are in the same address range as the test instrument are compared. The preferred router is selected based on the routing protocol being used. For example, in the preferred embodiment, OSPF protocol (Open Shortest Path First) is given a higher ranking, followed by EIGRP (Enhanced Interior Gateway Routing Protocol), etc. Other protocols that are lower on the hierarchy are RIP (Routing Information Protocol) and IRDP (ICMP Router Discovery Protocol). If multiple IP addresses are found with the same routing protocol preference in the hierarchy, the lower IP address is selected. The DNS server selected is the lowest DNS server IP address in the same address range as the test instrument. However, if there is no DNS server that has been found in the same address ranges as the test instrument, then any discovered DNS server is selected. If no DNS server has been discovered, then the DNS server from the last user-specified configuration is employed.

After the test instrument or other device has completed the automatic IP configuration process, a periodic timer may be started to occasionally validate and automatically correct the configuration. This is suitably employed only if a fully automatic configuration has been used. If the configuration is manually set or partially assisted by the user, the automatic correction is preferably skipped. The period timer is suitably 5 seconds in a preferred embodiment, and, after a longer period has elapsed, e.g. 5 minutes, the automatic correction process can suitably be stopped.

The test instrument can now automatically run segment discovery tests in parallel with the previously mentioned automatic correction steps to analyze all the network devices within the broadcast domain (the part of a network that receives the same broadcasts) to detect local hosts, switches, routers, servers, and other network devices. Further addressing information such as IP addresses, MAC addresses, subnet masks and such are thus suitably discovered. This is suitably accomplished by unicast traffic, since some devices may not respond to broadcasts. A detailed database of the various devices and networks is compiled. The auto-correction process employs the database to update the IP configuration if a better router, DNS server or proper subnet mask is identified.

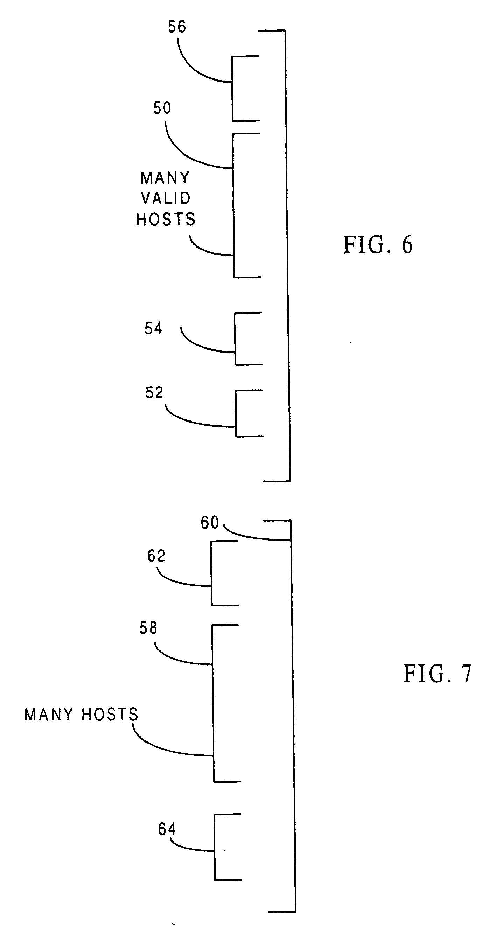

An example of validation in a particular situation is illustrated in FIG. 6, is a representative graphic showing address range and host locations wherein multiple non-contiguous groups of address ranges with corresponding subnet masks are found. In FIG. 6, many valid hosts are located in the address range 50. Additionally, a few hosts are in address ranges 52, and 54, while some greater amount of hosts are in address range 56 (but still fewer than the number of hosts in range 50). In the situation of FIG. 6, all address ranges are validated and the address range in region 50 is selected as the "best" address range.

FIG. 7 is a representative graphic showing validation in another possible situation. In this configuration, a group of many hosts is contained within the bounds of an address range 58 that is completely contained within a larger address range 60. In this configuration the hosts in address range 58 are validated, while those in ranges 62 and 64 are left unvalidated due to conflicting information.

In the validation process, hosts are initially placed where they claim to belong. After validation, a host is put within the first validated address range that it fits into. If there is no valid address range that the host fits into, it is placed where it claims to want to be, if it has a subnet mask, or in any address range with the most hosts that the host fits into.

Therefore, according to an embodiment of the invention, an apparatus and method for obtaining a valid IP configuration automatically has been shown and described. A test instrument may thereby obtain an IP address without causing networking problems on the network. While the illustrated embodiment is mainly described in the case of a network test instrument, the invention is also suitably applied to automatically obtain an IP configuration for other devices that may connect to a network. For example, a portable computer (lap top, notebook, etc.) employing the method or apparatus of the invention can advantageously be connected to a network and automatically obtain an IP configuration.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the scope of the invention.

## Claims

1. A method for automatically obtaining a valid IP configuration in a local area network, comprising the steps of:
monitoring network traffic (100) and validating at least one IP subnet;
selecting a likely unused IP address in the at least one IP subnet; and
determining whether the selected IP address is unused; **characterised in that** said monitoring and validating comprises
placing (106) a discovered local host into an address range; and determining (108) whether said discovered local host reported a subnet mask and if so, placing said host in a database address range having the host's source IP address and subnet mask.

2. A method for automatically obtaining a valid IP configuration in a local area network according to claim 1, further comprising the step of:
attempting dynamic host configuration protocol (102) prior to said step of monitoring network traffic and validating and said step of selecting a likely unused IP address, and skipping said monitoring and selecting steps if said step of attempting DHCP is successful.

3. A method for automatically obtaining a valid IP configuration in a local area network according to claim 1, wherein said monitoring step (100) includes identifying local addresses.

4. A method for automatically obtaining a valid IP configuration in a local area network according to claim 3, wherein said monitoring step (100) further includes identifying subnet masks corresponding to said local addresses.

5. A method for automatically obtaining a valid IP configuration in a local area network according to claim 1, wherein said monitoring step (100) includes identifying local routers.

6. A method for automatically obtaining a valid IP configuration in a local area network according to claim 1, wherein said monitoring step (100) includes identifying local servers.

7. A method for automatically obtaining a valid IP configuration in a local area network according to claim 1, comprising the step of selecting a likely unused IP address comprises sending an Internet Control message Protocol address mask request.

8. A method for automatically obtaining a valid IP configuration in a local area network according to claim 7, wherein said step of sending an ICMP address mask is performed with a zero source IP.

9. A method for automatically obtaining a valid IP configuration in a local area network according to claim 1, further comprising the step of determining whether said discovered local host reported a subnet mask and if not, placing said host in a database address range containing this host's source IP with the largest count of hosts claiming a matching subnet mask (112).

10. A method for automatically obtaining a valid IP configuration in a local area network according to claim 1, wherein said step of selecting a likely unused IP address in the at least one IP subnet comprises selecting a best address range, wherein said selecting a best address range comprises selecting IP subnets where a subnet mask has been discovered or where a router has been found as preferred subnets, or, next in a preference hierarchy, selecting the IP subnet that contains the most hosts.

11. A method for automatically obtaining a valid IP configuration in a local area network according to claim 10, further comprising the step of selecting a most likely subnet mask, wherein said most likely subnet mask comprises a mask discovered as a result of traffic analysis.

12. A method for automatically obtaining a valid IP configuration in a local area network according to claim 10, further comprising the step (124) of selecting a most likely subnet mask, wherein said most likely subnet mask comprises a mask last specified by a user.

13. A method for automatically obtaining a valid IP configuration in a local area network according to claim 10, further comprising the step (124) of selecting a most likely subnet mask, wherein said most likely subnet mask is selected as a narrow mask, and said mask is expanded until substantially all local addresses in the selected address range fit within said subnet mask or until a limit is reached.

14. A method for automatically obtaining a valid IP configuration in a local area network according to claim 10, wherein a source IP start value is selected as an IP check address, and wherein said step of determining whether the IP address is unused is performed using said IP check address value.

15. A method for automatically obtaining a valid IP configuration in a local area network according to claim 14, wherein if said IP check address is not available, iteratively altering said IP check address, until an available address is determined.

16. An apparatus for automatically obtaining a valid IP configuration in a local area network, comprising:
network traffic monitor for monitoring and validating at least one IP subnet;
IP address selector for selecting a likely unused IP address in the at least one IP subnet and determining whether the selected IP address is unused, **characterised in that** said network traffic monitor validates the at least one IP subnet by placing (106) a discovered local host into an address range; and
determining (108) whether said discovered local host reported a subnet mask and if so, placing said host in a database address range having the host's source IP address and subnet mask.

17. The apparatus for automatically obtaining a valid IP configuration in a local area network according to claim 16, wherein said IP address selector selects a source IP start value as an IP check address and determines whether the IP address is unused is performed using said IP check address value.

## Patentansprüche

1. Verfahren zum automatischen Erhalten einer gültigen IP-Konfiguration in einem lokalen Netzwerk, welches die folgenden Schritte umfasst:
das Überwachen des Netzwerkverkehrs (100) und das Validieren von mindestens einem IP-Teilnetz;
das Auswählen einer wahrscheinlich ungenutzten IP-Adresse in dem mindestens einen IP-Teilnetz; und
das Bestimmen, ob die ausgewählte IP-Adresse ungenutzt ist, **dadurch gekennzeichnet, dass** die Überwachung und Validierung Folgendes umfassen:
das Platzieren (106) eines erkannten lokalen Hosts in einem Adressbereich; und das Bestimmen (108), ob der erkannte lokale Host eine Teilnetzmaske gemeldet hat, und wenn dem so ist, das Platzieren des Hosts in einem Datenbankadressbereich, welcher die Quell-IP-Adresse und die Teilnetzmaske des Hosts aufweist.

2. Verfahren zum automatischen Erhalten einer gültigen IP-Konfiguration in einem lokalen Netzwerk nach Anspruch 1, welches ferner folgenden Schritt umfasst:
den Versuch eines Dynamischen Host-Konfigurationsprotokolls (DHCP - Dynamic Host Configuration Protocol) (102) vor dem Schritt der Überwachung des Netzwerkverkehrs und der Validierung und dem Schritt der Auswahl einer wahrscheinlich ungenutzten IP-Adresse, und das Weglassen der Überwachungs- und Auswahlschritte, wenn der Schritt des Versuchs des DHCP erfolgreich ist.

3. Verfahren zum automatischen Erhalten einer gültigen IP-Konfiguration in einem lokalen Netzwerk nach Anspruch 1, wobei der Überwachungsschritt (100) das Identifizieren lokaler Adressen beinhaltet.

4. Verfahren zum automatischen Erhalten einer gültigen IP-Konfiguration in einem lokalen Netzwerk nach Anspruch 3, wobei der Überwachungsschritt (100) ferner das Identifizieren von Teilnetzmasken beinhaltet, welche den lokalen Adressen entsprechen.

5. Verfahren zum automatischen Erhalten einer gültigen IP-Konfiguration in einem lokalen Netzwerk nach Anspruch 1, wobei der Überwachungsschritt (100) das Identifizieren lokaler Router beinhaltet.

6. Verfahren zum automatischen Erhalten einer gültigen IP-Konfiguration in einem lokalen Netzwerk nach Anspruch 1, wobei der Überwachungsschritt (100) das Identifizieren lokaler Server beinhaltet.

7. Verfahren zum automatischen Erhalten einer gültigen IP-Konfiguration in einem lokalen Netzwerk nach Anspruch 1, wobei der Schritt des Auswählens einer wahrscheinlich ungenutzten IP-Adresse das Senden einer Internet Control Message Protocol (ICMP) -Adressmaskenanfrage umfasst.

8. Verfahren zum automatischen Erhalten einer gültigen IP-Konfiguration in einem lokalen Netzwerk nach Anspruch 7, wobei der Schritt des Sendens einer ICMP-Adressmaske mit einer Nullquellen-IP erfolgt.

9. Verfahren zum automatischen Erhalten einer gültigen IP-Konfiguration in einem lokalen Netzwerk nach Anspruch 1, welches ferner den Schritt der Bestimmung umfasst, ob der erkannte lokale Host eine Teilnetzmaske gemeldet hat, und wenn dem nicht so ist, der Platzierung des Hosts in einem Datenbankadressbereich, welcher die Quell-IP dieses Hosts mit der größten Anzahl an Hosts, welche eine übereinstimmende Teilnetzmaske (112) fordern, enthält.

10. Verfahren zum automatischen Erhalten einer gültigen IP-Konfiguration in einem lokalen Netzwerk nach Anspruch 1, wobei der Schritt der Auswahl einer wahrscheinlich ungenutzten IP-Adresse in dem mindestens einen IP-Teilnetz das Auswählen eines besten Adressbereiches umfasst, wobei das Auswählen eines besten Adressbereiches das Auswählen von IP-Teilnetzen, in denen eine Teilnetzmaske erkannt wurde oder in denen ein Router gefunden wurde, als bevorzugte Teilnetze, oder als nächstes in der Präferenzhierarchie, das Auswählen des IP-Teilnetzes, welches die meisten Hosts enthält, umfasst.

11. Verfahren zum automatischen Erhalten einer gültigen IP-Konfiguration in einem lokalen Netzwerk nach Anspruch 10, welches ferner den Schritt des Auswählens einer wahrscheinlichsten Teilnetzmaske umfasst, wobei die wahrscheinlichste Teilnetzmaske eine Maske umfasst, welche aufgrund einer Verkehrsanalyse erkannt wurde.

12. Verfahren zum automatischen Erhalten einer gültigen IP-Konfiguration in einem lokalen Netzwerk nach Anspruch 10, welches ferner den Schritt (124) des Auswählens einer wahrscheinlichsten Teilnetzmaske umfasst, wobei die wahrscheinlichste Teilnetzmaske eine Maske umfasst, die zuletzt durch einen Benutzer spezifiziert wurde.

13. Verfahren zum automatischen Erhalten einer gültigen IP-Konfiguration in einem lokalen Netzwerk nach Anspruch 10, welches ferner den Schritt (124) des Auswählens einer wahrscheinlichsten Teilnetzmaske umfasst, wobei die wahrscheinlichste Teilnetzmaske als eine schmale Maske ausgewählt wird, und die Maske erweitert wird, bis im Wesentlichen alle lokalen Adressen in dem ausgewählten Adressbereich in die Teilnetzmaske passen oder bis eine Grenze erreicht ist.

14. Verfahren zum automatischen Erhalten einer gültigen IP-Konfiguration in einem lokalen Netzwerk nach Anspruch 10, wobei ein Quell-IP-Startwert als eine IP-Prüfadresse ausgewählt wird, und wobei der Schritt des Bestimmens, ob die IP-Adresse ungenutzt ist, unter Verwendung des IP-Prüfadresswertes erfolgt.

15. Verfahren zum automatischen Erhalten einer gültigen IP-Konfiguration in einem lokalen Netzwerk nach Anspruch 14, wobei, wenn die IP-Prüfadresse nicht verfügbar ist, die IP-Prüfadresse iterativ verändert wird, bis eine verfügbare Adresse bestimmt wird.

16. Vorrichtung zum automatischen Erhalten einer gültigen IP-Konfiguration in einem lokalen Netzwerk, welche Folgendes aufweist:
eine Netzwerkverkehr-Überwachungseinheit zum Überwachen und Validieren von mindestens einem IP-Teilnetz;
eine IP-Adress-Auswahleinheit zum Auswählen einer wahrscheinlich ungenutzten IP-Adresse in dem mindestens einen IP-Teilnetz und zum Bestimmen, ob die ausgewählte IP-Adresse ungenutzt ist,
**dadurch gekennzeichnet, dass** die Netzwerkverkehr-Überwachungseinheit das mindestens eine IP-Teilnetz validiert, indem ein erkannter lokaler Host in einem Adressbereich platziert wird (106); und
das Bestimmen (108), ob der erkannte lokale Host eine Teilnetzmaske gemeldet hat, und wenn dem so ist, das Platzieren des Hosts in einem Datenbankadressbereich, welcher die Quell-IP-Adresse und die Teilnetzmaske des Hosts aufweist.

17. Vorrichtung zum automatischen Erhalten einer gültigen IP-Konfiguration in einem lokalen Netzwerk nach Anspruch 16, wobei die IP-Adress-Auswahleinheit einen Quell-IP-Startwert als eine IP-Prüfadresse auswählt, und bestimmt, unter Verwendung des IP-Prüfadresswertes, ob die IP-Adresse ungenutzt ist.

## Revendications

1. Procédé pour obtenir automatiquement une configuration IP valide dans un réseau local, comprenant les étapes qui consistent à :
surveiller (100) un trafic réseau et valider au moins un sous-réseau IP ;
sélectionner une adresse IP probablement inutilisée de le ou les sous-réseaux IP ; et
déterminer si l'adresse IP sélectionnée est inutilisée ou non ; **caractérisé en ce que** ladite étape de surveillance et de validation comprend les étapes qui consistent à :
placer (106) dans une plage d'adresses un hôte local découvert ; et déterminer (108) si ledit hôte local découvert a signalé un masque de sous-réseau, et, si tel est le cas, placer ledit hôte dans une plage d'adresses de base de données comportant l'adresse IP de source et le masque de sous-réseau de l'hôte.

2. Procédé pour obtenir automatiquement une configuration IP valide dans un réseau local, selon la revendication 1, comprenant également l'étape qui consiste à :
essayer (102) un protocole de configuration dynamique d'hôte (DHCP) avant ladite étape de surveillance du trafic réseau et de validation et ladite étape de sélection d'une adresse IP probablement inutilisée, et sauter lesdites étapes de surveillance et de sélection si ladite étape d'essai de DHCP est fructueuse.

3. Procédé pour obtenir automatiquement une configuration IP valide dans un réseau local, selon la revendication 1, dans lequel ladite étape de surveillance (100) comprend l'identification d'adresses locales.

4. Procédé pour obtenir automatiquement une configuration IP valide dans un réseau local, selon la revendication 3, dans lequel ladite étape de surveillance (100) comprend également l'identification de masques de sous-réseau correspondant auxdites adresses locales.

5. Procédé pour obtenir automatiquement une configuration IP valide dans un réseau local, selon la revendication 1, dans lequel ladite étape de surveillance (100) comprend l'identification de routeurs locaux.

6. Procédé pour obtenir automatiquement une configuration IP valide dans un réseau local, selon la revendication 1, dans lequel ladite étape de surveillance (100) comprend l'identification de serveurs locaux.

7. Procédé pour obtenir automatiquement une configuration IP valide dans un réseau local, selon la revendication 1, dans lequel l'étape de sélection d'une adresse IP probablement inutilisée comprend l'envoi d'une demande de masque d'adresse sous protocole de contrôle de message Internet (ICMP).

8. Procédé pour obtenir automatiquement une configuration IP valide dans un réseau local, selon la revendication 7, dans lequel ladite étape d'envoi d'un masque d'adresse ICMP est réalisée avec une adresse de source IP comportant des zéros.

9. Procédé pour obtenir automatiquement une configuration IP valide dans un réseau local, selon la revendication 1, comprenant également l'étape qui consiste à déterminer si ledit hôte local découvert a signalé un masque de sous-réseau, et, si tel est le cas, à placer (112) ledit hôte dans une plage d'adresses de base de données contenant l'adresse IP de source de cet hôte, ayant le plus grand nombre d'hôtes réclamant un masque de sous-réseau correspondant.

10. Procédé pour obtenir automatiquement une configuration IP valide dans un réseau local, selon la revendication 1, dans lequel ladite étape de sélection d'une adresse IP probablement inutilisée dans le ou les sous-réseaux IP comprend la sélection d'une meilleure plage d'adresses, ladite sélection d'une meilleure plage d'adresses comprenant la sélection, comme sous-réseaux préférés, de sous-réseaux IP dans lesquels un masque de sous-réseau a été découvert ou dans lesquels un routeur a été découvert ou ensuite, dans un ordre de préférence, la sélection du sous-réseau IP qui contient le plus d'hôtes.

11. Procédé pour obtenir automatiquement une configuration IP valide dans un réseau local, selon la revendication 10, comprenant également l'étape de sélection d'un masque de sous réseau très probable, ledit masque de sous-réseau très probable comprenant un masque découvert à la suite d'une analyse de trafic.

12. Procédé pour obtenir automatiquement une configuration IP valide dans un réseau local, selon la revendication 10, comprenant également l'étape (124) de sélection d'un masque de sous-réseau très probable, ledit masque de sous-réseau très probable comprenant un masque spécifié en dernier par un utilisateur.

13. Procédé pour obtenir automatiquement une configuration IP valide dans un réseau local, selon la revendication 10, comprenant également l'étape (124) de sélection d'un masque de sous-réseau très probable, ledit masque de sous-réseau très probable étant sélectionné comme masque étroit, et ledit masque étant élargi jusqu'à ce que sensiblement toutes les adresses locales de la plage d'adresses sélectionnée entrent dans ledit masque de sous-réseau ou jusqu'à ce qu'une limite soit atteinte.

14. Procédé pour obtenir automatiquement une configuration IP valide dans un réseau local, selon la revendication 10, dans lequel une valeur de début d'adresse IP de source est sélectionnée comme adresse de vérification IP, et dans lequel ladite étape qui consiste à déterminer si l'adresse IP est inutilisée ou non est réalisée à l'aide de ladite valeur d'adresse de vérification IP.

15. Procédé pour obtenir automatiquement une configuration IP valide dans un réseau local, selon la revendication 14, comprenant, si ladite adresse de vérification IP n'est pas disponible, l'étape qui consiste à modifier de manière itérative ladite adresse de vérification IP jusqu'à ce qu'une adresse disponible soit déterminée.

16. Appareil permettant d'obtenir automatiquement une configuration IP valide dans un réseau local, comprenant :
un surveillant de trafic réseau destiné à surveiller et à valider au moins un sous-réseau IP ;
un sélecteur d'adresse IP destiné à sélectionner une adresse IP probablement inutilisée dans le ou les sous-réseaux IP et à déterminer si l'adresse IP sélectionnée est inutilisée ou non, **caractérisé en ce que** ledit surveillant de trafic réseau valide le ou les sous-réseaux IP en plaçant (106) dans une plage d'adresses un hôte local découvert ; et
détermine (108) si ledit hôte local découvert a signalé un masque de sous-réseau, et, si tel est le cas, place ledit hôte dans une plage d'adresses de base de données comportant l'adresse IP de source et le masque de sous-réseau de l'hôte.

17. Appareil permettant d'obtenir automatiquement une configuration IP valide dans un réseau local, selon la revendication 16, dans lequel ledit sélecteur d'adresse IP sélectionne une valeur de début d'adresse IP de source comme adresse de vérification IP et détermine si l'adresse IP est inutilisée ou non à l'aide de ladite valeur d'adresse de vérification IP.
